# EUROPÄISCHE PATENTSCHRIFT

(11) **EP 0 932 518 B1**
(45) Veröffentlichungstag und Bekanntmachung des Hinweises auf die Patenterteilung: **29.08.2001**
(21) Anmeldenummer: 97945815.5
(22) Anmeldetag: 10.10.1997
(51) Int. Cl.: B60L 5/18

(54) **VORRICHTUNG ZUR VERMINDERUNG DER KONTAKTKRAFTSCHWANKUNGEN ZWISCHEN EINEM STROMABNEHMER UND EINER FAHRLEITUNG**
DEVICE FOR REDUCING CONTACT FORCE VARIATIONS BETWEEN A CURRENT COLLECTOR AND A CATENARY
DISPOSITIF DE REDUCTION DES VARIATIONS DE LA FORCE DE CONTACT ENTRE UN PANTOGRAPHE ET UNE CATENAIRE

(30) Priorität: 21.10.1996 DE 19643284
(43) Veröffentlichungstag der Anmeldung: 04.08.1999
(73) Patentinhaber: DaimlerChrysler Rail Systems GmbH, 13627 Berlin (DE)
(72) Erfinder: BRAND, Werner, D-13507 Berlin (DE); BOLLER, Christian, D-85604 Zorneding (DE); SENSBURG, Otto, D-82049 Pullach (DE); TOMLINSON, R. Geoffrey, Disley, Cheshire SK6 8HA (GB)
(74) Vertreter: Breiter, Achim, Dipl.-Ing. (FH)
(86) Internationale Anmeldenummer: EP9705613
(87) Internationale Veröffentlichungsnummer: WO9817495

(56) Entgegenhaltungen:
- EP-A- 0 276 748
- EP-A- 0 439 401
- US-A- 4 113 074
- PATENT ABSTRACTS OF JAPAN vol. 96, no. 7, 31.Juli 1996 & JP 08 084401 A (MITSUBISHI MATERIALS CORP), 26.März 1996,

## Beschreibung

Die Erfindung bezieht sich auf eine Vorrichtung gemäß dem Oberbegriff des ersten Anspruchs.

Eine bekannte Vorrichtung dieser Art (Patent Abstracts of Japan Vol. 96, No. 7, 31. Juli 1996 & JP-A-08084401) weist eine Basis, ein vierteiliges Scherengestänge, welches auf beiden Seiten der Basis gelenkig miteinander verbunden ist und im oberen Bereich ein Parallelogramm mit veränderlichen Diagonalen bildet, eine Kontaktleiste mit zwei Kontaktstreifen am oberen Ende des Gestänges, einen Anpreßmechanismus mit einem piezoelektrischen Aktuator, eine Schraubenfeder zum Verbinden der Kontaktleiste mit dem Anpreßmechanismus und einen Sensor zum Aufnehmen der Kontaktkraft zwischen der Kontaktleiste und dem Fahrdraht auf, der mit dem piezoelektrischen Aktuator über einen Steuermechanismus verbunden ist. Die Kontaktkraft zwischen dem Fahrdraht und der Kontaktleiste wird von dem Sensor gemessen und kann eingestellt werden durch Ausdehnen und Zusammenziehen des Gestänges auf der Grundlage der Meßdaten der Kontaktkraft.

Eine bekannte Vorrichtung (US-A-4113074) weist einen Scheren-Stromabnehmer mit einer am oberen freien Ende angeordneten Wippe auf, die über eine Schleifleiste mit einer Fahrleitung elektrisch in Kontakt steht. Zur Erfassung nieder- und hochfrequenter Kontaktkraftschwankungen ist dabei der Wippe ein erstes hydraulisches Aktorelement zugeordnet, das über einen piezoelektrischen Kontaktkraftsensor mit der Schleifleiste verbunden ist. Der Kontaktkraftsensor generiert dabei abhängig von der augenblicklich ermittelten Kontaktkraft ein Steuersignal, aus dem niederfrequente Kontaktkraftschwankungen ausgefiltert werden, die einen weiteren hydraulischen Akuator steuern, der das Scherengestell des Stromabnehmers steuert. Die höherfrequenten Anteile der Kontaktkraftschwankungen werden dagegen in Steuersignale umgesetzt, welche dem der Wippe zugeordneten ersten Aktuatorelement aufgeschaltet werden.

Bei einer weiteren bekannten Vorrichtung mit einem Stromabnehmer (EP-A1-0276 748) wird zur Konstanthaltung der zwischen Fahrleitung und Schleifleiste erforderlichen Kontaktkraft eine vorzugsweise rechnergestützte Regeleinrichtung benutzt, die zur Beeinflussung der Feder-Dämpfer und Massecharakteristik des dem Hubapparat eines Stromabnehmers nachgeschalteten schwingungsfähigen Systems wie auch des Hubapparates selbst, verwendet wird.

Bei einer weiteren bekannten Vorrichtung (DE 3033449 C2) ist der Stromabnehmer als zweistufiger Scheren-Stromabnehmer mit einer über eine Stromabmehmerwippe an einer Fahrleitung anliegenden oberen Schere und mit einer diese tragenden Hauptschere ausgebildet. Ein der oberen Schere zugeordneter erster Stellmotor wird von einem Regler mit Signalen zur Konstanthaltung der Kontaktkraft versorgt. Ein zweiter Stellmotor ist der Hauptschere zugeordnet und wird von einem zweiten Regler mit Stellsignalen zur Aufrechterhaltung eines im zeitlichen Mittel konstanten Stellwegs der ersten Stellvorrichtung gespeist. Mit dieser Vorrichtung soll eine konstante Kontaktkraft sowohl bei deutlichen Veränderungen der Fahrleitungshöhe als auch bei sehr hohen Fahrgeschwindigkeiten beibehalten werden. Der zweistufige Scherenstromabnehmer ist im Vergleich zu konventionellen Stromabnehmern, die nur eine Schere aufweisen, relativ aufwendig aufgebaut.

Die Höchstgeschwindigkeit von schnellen elektrischen Hochleistungsschienenfahrzeugen wird u.a. dadurch begrenzt, daß die den Stromabnehmer anregenden Schwingungen in ihrer Amplitude mit steigender Geschwindigkeit zunehmen. Deshalb kann ab einer bestimmten Grenzgeschwindigkeit zum einen kein kontinuierlicher Kontakt zwischen Stromabnehmer und Oberleiung gewährleistet werden, zum anderen kann es zu Überschreitungen der zulässigen Anpreßkraft zwischen Stromabnehmer und Fahrdraht kommen , die zu einem deutlich erhöhten Verschleiß der Schleifstücke des Stromabnehmers führen. Diese Grenzgeschwindigkeit hängt primär von den Steifigkeitsverhältnissen des Systems Stromabnehmer/Oberleitung bzw. den auf dieses System extern ausgeübten Kräften ab (Massekräfte aus bewegtem Fahrzeugkörper, aerodynamische Kräfte, Fahrleitungsanregung durch Mehrfachtraktion etc.).

Konventionell versucht man die Grenzgeschwindigkeit dadurch zu erhöhen, daß man die Steifigkeit der Oberleitung erhöht, z.B. durch Verringerung der Mastabstände oder Erhöhung des Leitungsquerschnitts (Becker K., Resch, U., Zweig B.-W.: "Optimierung von Hochgeschwindigkeitsoberleitungen" in Elektr. Bahnen, 92 (1994), H. 9, S. 243- 248). Dies erfordert jedoch einen hohen konstruktiven Aufwand, weil dieser Maßnahme ganze Streckenabschnitte unterzogen werden müssen. Eine andere Vorgehensweise besteht in der verstärkten Durchführung von Leichtbaumaßnahmen am Stromabnehmer (Daimler-Benz Industrie AEG: Broschüre zum Stromabnehmer DSA 350 SEK; 1995). Hier sind aus Gründen der Kostenvorgabe enge Grenzen gesetzt.

Die Änderungen der Kontaktkraft werden u.a. auch durch Änderungen in der aerodynamischen Beanspruchung des Stromabnehmers verursacht. Zur Verminderung solcher Kontaktkraftänderungen ist ein Doppelscherenstromabnehmertyp bekannt, dessen vertikal verschieblich gelagerte Wippe mit aussteuerbaren Flügelelementen versehen ist, die, je nach Abweichung der Kontaktkraft zwischen Schleifleiste und Fahrdraht von ihrem Sollwert, für den erforderlichen Auftrieb bzw. Abtrieb sorgen (DE-OS 23 63 683).

Bekannt ist auch ein Stromabnehmer, bestehend aus Lenkerstange, Unter- und Oberarm und einem darauf aufgesetzten sog. "Ministromabnehmer", der über einen zwischen Oberarm und Ministromabnehmer angeordneten Stellzylinder verstellbar ist. Der Ministromabnehmer soll den Bewegungen des Fahrdrahtes nahezu trägheitslos folgen und mit konstanter Anpreßkraft an den Fahrdraht auch bei hohen Geschwindigkeiten angedrückt werden. Ein Sensor erfaßt die Anpreßkraft zwischen Ministromabnehmer und Fahrdraht. Der Istwert der Anpreßkraft wird mit einem Sollwert zur Bildung einer Regelabweichung verglichen, die einen 1-Regler beaufschlagt, der Stellsignale an den Stellzylinder ausgibt (DE-OS 21 65 813). Der Stromabnehmer ist wie der oben bereits erwähnte Stromabnehmer zweistufig aufgebaut und gegenüber Stromabnehmern mit einer Schere relativ aufwendig.

Erste Ansätze, auf die Kontaktkraft zwischen einem eine Schere aufweisenden Stromabnehmer und Fahrdraht aktiv Einfluß zu nehmen, bestehen in der geregelten Betätigung des Luftbalgs zum Heben und Senken des Stromabnehmers auch während der Fahrt (Schrenk, T.: Diplomarbeit FH Offenburg, Tascher, G.: Diplomarbeit FH Offenburg). Die damit erreichbaren Frequenzen liegen bei maximal 1 Hz, womit man nicht in der Lage ist, Kontaktkraftschwnakungen auszugleichen, die bei Höchstgeschwindigkeit von 400 km/h und mehr oder bei Mehrfachtraktion bereits bei geringeren Geschwindigkeiten auftreten.

Zur Regelung der Kontaktkraft zwischen Stromabnehmer und Fahrdraht ist es auch bekannt, einen faseroptischen Sensor unterhalb der Schleifleiste vorzusehen, der als Schwellwertschalter bei Unterschreitung einer vorbestimmten Kontaktkraft eine Hubvorrichtung steuert, mit der die Kontaktkraft verstärkt wird (DE 38 31 177 A1).

In Untersuchungen an einem Halbscherenstromabnehmer ist festgestellt worden, daß die durch die Kontaktkraftschwankungen auf den Stromabnehmer induzierten Schwingungen im wesentlichen die Wippe des Stromabnehmers beeinflussen, während am Ober- und Unterarm nur eine vernachlässigbare Wirkung zu messen ist (Brand W. Diplomarbeit TU München, 1995).

Der Erfindung liegt das Problem zugrunde, eine Vorrichtung zur Verminderung der Kontaktkraftschwankungen zischen einem Stromabnehmer und der Fahrleitung zu schaffen, mit der eine Vereinfachung der Kontakkraftsteuerung an der Wippe des Stromabnehmers ermöglicht wird.

Die Lösung dieser Aufgabe erfolgt gemäß der Erfindung durch die kennzeichnenden Merkmale des ersten Anspruchs.

Durch die Ausbildung des Aktorelements als beschichteter piezoelektrischer Aktor, der unter einer von der Kontaktkraft abhänigen mechanischen Vorspannung steht und an dem zugleich direkt die Signale für die Bestimmung der Kontaktkraft abgegriffen werden, wird der Aktor nicht nur zur Aufrechterhaltung einer vorgegebenen Kontaktkraft unter optimaler Ausnutzung seines Arbeitsbereichs herangezogen, sondern er übernimmt zugleich auch die Sensorfunktion. Dieses Aktorelement, das mit dem Regler beeinflußt wird, der seinerseits durch die Sensorfunktion dieses Aktorelements gesteuert wird, paßt sich der betragsmäßigen Höhe seiner Aktoreigenschaften bzw. den Belastungszuständen an. Das Aktorelement ist über den Regler mit dem Sensor in einem offenen oder geschlossenem Regelkreis verbunden.

Die äußere zu regelnde Größe ist die Kontaktkraft, wobei es sich hier um die zeitliche, durch Schwingungen verursachte Änderung der Anpreßkraft zwischen Schleifleiste und Fahrdraht handelt, oder die Beschleunigung der Schleifleisten.

Bei einer bevorzugten Ausführungsform ist das Aktorelement an oder in einem Halter befestigt, der seismisch gelagert ist. Prinzip einer seismischen Lagerung ist es, daß der Aktor im passiven Betrieb aufgrund seiner federnden Lagerung dem Schwingweg der Schleifleiste folgen kann. Da die Resonanzfrequenz der federnden Lagerung des Aktorelements mindestens 2 Oktaven niedriger als die untere Grenzfrequenz der zu regelnden Kontaktkraft ist, kann der Aktor im aktiven Betrieb einen relativen Stellweg und somit eine Kraft auf die Schleifleiste aufbringen, da die seismische Lagerung kurzzeitig blokkiert wird. Mit dieser Lagerung kann somit die Schleifleiste längs der Federwege bewegt werden, ohne daß die Erzeugung der Anpreßkräfte durch das Aktorelement beeinträchtigt wird.

Da die Kontaktkraft proportional zur Beschleunigung ist, kann auch die Beschleunigung der Schleifleiste als Regelsignal aufgenommen werden, wobei über ein Tracking-Filter nur die Grundwelle sowie die 1. und 2. Oberwelle durchgelassen und das daraus erhaltene Signal durch einen PID-Regler oder P-Regler über einen Hochvoltverstärker auf einen Piezoaktor geschaltet werden. Zur Messung der Beschleunigung wird der piezoelektrisch wirkende Aktor aufgrund seiner sensorischen Eigenschaften als Sensor selbst verwendet.

In dem Regelkreis kann vor dem Aktorelement ein Tracking-Filter eingebaut werden, dessen Frequenz fortlaufend auf einen Wert, der der Geschwindigkeit des Zuges dividiert durch den Abstand zwischen benachbarten Masten oder Hängerelementen entspricht, angepaßt wird. Das Filter hat die Aufgabe, nur die zuvor beschriebene Frequenz sowie dessen 1. und evtl. 2. Oberwelle durchzulassen und alle anderen Frequenzanteile herauszufiltern. Eine Durchlaß- und/oder Sperrkennlinie kann, muß aber nicht notwendigerweise mitgeführt werden. Mit diesem Tracking-Filter wird verhindert, daß Eigenformen der Wippe durch den Aktor mit Energie beaufschlagt werden und in den Zustand Selbsterregung geraten, oder daß der Aktor selbst zur Instabilität neigt. Da Mast- und Hängerabstände überwiegend konstant sind, genügt es, die Geschwindigkeit des Zuges aufzunehmen, ansonsten müssen auch die Abstände der Masten und Hängerelemente über eine geeignete Sensorik erfaßt werden.

Die wesentlichen Vorteile der Erfindung bestehen darin, daß Kontaktkraftschwankungen zwischen Stromabnehmer und Fahrdraht gezielt, d.h. quasi unabhängig von der Geschwindigkeit eines Zuges minimiert werden können. Damit ist es möglich, daß
1. Züge oberhalb einer Geschwindigkeit von 350 km/h fahren können, ohne daß es dabei zu einer Unterschreitung der zulässigen Kontaktkraft zwischen Stromabnehmer und Fahrdraht, noch zu einem erhöhten Verschleiß von Schleifleisten oder Fahrdraht durch Überschreiten der zulässigen Kontaktkraft im Vergleich zu konventionellen Systemen kommt,
2. mit mehr als einem im Betrieb befindlichen Stromabnehmer an einem Zug bei Geschwindigkeiten > 280 km/h gefahren werden kann,
3. sich der Verschleiß an Schleifleisten und Fahrdraht gegenüber den bisherigen Stromabnehrnersystemen verringert.

Die Erfindung wird im folgenden anhand eines Ausführungsbeispiels näher beschrieben, aus dem sich weitere Einzelheiten, Merkmale und Vorteile ergeben.

Es zeigen:
- Fig. 1: einen einstufigen Scherenstromabnehmer schematisch in Seitenansicht,
- Fig. 2: einen Teil des Scherenstromabnehmers gemäß Fig. 1, der sich auf den Bereich der Wippe bezieht, schematisch in Seitenansicht.

Auf dem Dach 1 eines elektrisch betriebenen Fahrzeugs ist ein Stromabnehmer 2 angeordnet, der einen Unterarm 3, eine Lenkerstange 4 und einen Oberarm 5 aufweist. Die Lenkerstange 4 ist in Punkt 6 und der Unterarm 3 in Punkt 7 drehbar gelagert. Der Oberarm 5 ist im Drehpunkt 8 mit dem Unterarm und mit einem Oberarmhebel 9 kraft- und formschlüssig verbunden, der an der Lenkerstange 4 angelenkt ist. Am oberen Ende des Oberarms 5 ist eine Wippe 10 drehbar gelagert, die mindestens eine Schleifleiste 11 trägt, die an einer Fahrleitung 12 anliegt.

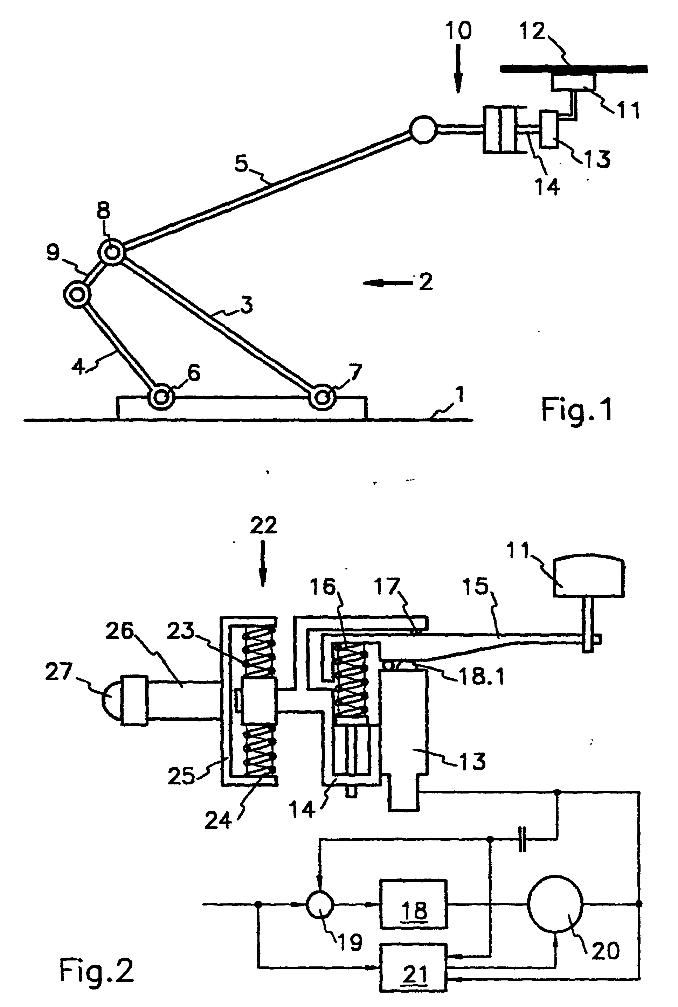

Je nach Ausführung der Wippe kann diese mit einem oder mehreren Aktoren versehen sein. In Fig. 1 zeigt das Ausführungsbeispiel einen Aktuator 13, der als geschichteter piezoelektrischer Aktuator ausgebildet ist. Der Aktuator 13 ist an einem Halter 14 starr befestigt. Die Schleifleiste 11 sitzt auf einem als Festkörpergelenk ausgebildeten Hebelarm 15, der im Halter 14 zwischen Lagerelementen 17, 18.1 schwenkbar gelagert ist. An einem Ende des Hebelarms 15, das der Schleifleiste 11 abgewandt ist, greift eine Feder 16 an, deren anderes Ende mit dem Halter 14 verbunden ist.

Die Feder 16 übt auf den Hebelarm 15 eine Kraft aus, die es zum einen ermöglicht, die Schleifleiste 11 gegen den Fahrdraht 12 zu drücken, zum anderen den Aktor 13 unter eine Vorspannung zu setzen. Letzeres hat bei piezoelektrisch wirkenden Aktoren den Vorteil, daß ihr Arbeitsbereich besser ausgenutzt werden kann.

Der Aktor 13 ist in einem adaptiven Regelkreis angeordnet, der einen Regler 18 enthält. Istwerte der Regelgröße sind die proportional der Wippenbeschleunigung auftretenden Schwankungen der Kontaktkraft, die einem Tracking-Filter 28 zugeführt werden, das nur die zuvor genannten, für den Stromabnehmer charakteristischen Frequenzen nämlich die Grundwelle und die 1. und 2. Oberwelle durchläßt. Die gefilterten Signale werden dann an eine Summierstelle 19 weitergeleitet, an der aus den Istwerten und einem Sollwert die Regelabweichung gebildet wird, die den Regler 18 beaufschlagt, dem ein Glied 20, nachgeschaltet ist, mit dem die Ausgangssignale des Reglers durch ein von einem Einstellorgan 21 ausgegebenes Signal adaptiv verändert werden, bevor sie an den Aktor 13 angelegt werden. Das Einstellorgan wird von den Istwerten, den Sollwerten und dem Stellsignal am Ausgang des Glieds 20 beaufschlagt und paßt die Reglereigenschaften den bei unterschiedlichen Fahrzeuggeschwindigkeiten vorhandenen unterschiedlichen Regelstreckeneigenschaften an.

Der Sollwert bezieht sich auf eine mittlere vorzugebende Kontaktkraft.

Die Bestimmung der statischen Anpreßkraft ist nicht generell erforderlich. Es wird die zeitliche Änderung der Anpreßkraft gemessen, die über die Messung der Beschleuigung an der Stromabnehmerwippe erfaßt wird. Die Beschleunigung ist somit eine Größe, die unter Einbeziehung der Masse verstärkt und dem Aktor so aufgeschaltet wird, daß der Aktor der auftretenden Richtung der Änderungskraft entgegenwirkt. Bei Auslegung des Regelkreises ist der Typ des Aktors einzubeziehen. Piezoelektrischer Aktuator: einfacher P-Regler, pneumatischer und hydraulischer Aktuator: P-Regler oder PID-Regler verknüpft mit Zustandsregler;

Für den Fall, daß der Aktor nicht mit der für das Schienenfahrzeug üblichen Betriebsspannung betrieben wird, erfolgt die Zuführung der Spannung zum. Aktor 13 über gegen Hochspannung isolierte Kabel, die durch die Holme von Ober- und Unterarm 35 des Stromabnehmers hindurchgezogen werden können. Diese gegen Hochspannung isolierten Kabel ermöglichen es, daß das elektrische Feld, das durch die erforderliche Betriebsspannung des Schienenfahrzeugs erzeugt wird, nicht die Betriebsspannung des Aktors 13 beeinflußt. Desweiteren wird der Aktor 13 durch konstruktive Maßnahmen gegenüber der Hochspannung der Oberleitung isoliert.

Der Aktor 13 wird über eine Halterung 22 so am Stromabnehmer bzw. der Wippe 10 befestigt, daß entweder über den Aktor 13 direkt oder über einen Hebelmechanismus eine gegenüber der statischen Anpreßkraft zusätzliche, vom Betriebsverlauf abhängige, geregelte Anpreßkraft auf die Schleifleiste aufgebracht wird. Um die Federwege der Schleifleiste ausführen und dabei gleichzeitig die variablen Anpreßkräfte aufbringen zu können, wird die Aktuatorhalterung seismisch gelagert. Die seismische Lagerung wird durch Federn 23, 24 erreicht, die mit dem Halter 14 und einem Gehäuse 25 verbunden sind, das topfförmig ausgebildet ist und ein starres Verbindungsstück 26 besitzt, das den Anschluß zum Scheitelrohr 27 des Stromabnehmers bildet Der Halter 14 bewegt sich aufgrund der seismischen Lagerung nur wenig, wenn der Oberarm 5 den vom Fahrzeug z.B. beim Überfahren von Weichen ausgehenden Erschütterungen folgt.

Zur Regelung der Anpreßkraft wird die Kontaktkraft zwischen Schleifleiste und Fahrdraht gemessen. Dies kann über den piezoelektrisch wirkenden Aktuator 13 selbst erfolgen.

Es hat sich aus einer Frequenzanalyse des Kontaktkraftsignals gezeigt, daß sich die größte Störamplitude bei einer erzwungenen Schwingung ergibt, deren Frequenz bei der Zuggeschwindigkeit dividiert durch den Mast- oder Hängerabstand der Fahrleitung liegt. Um zu gewährleisten, daß das Eigenschwingungsverhalten der Wippe durch Energiezufuhr nicht instabil wird, wird in den Regelkreis ein Tracking Filter eingebaut Dieses Tracking Filter wird quasi in Echtzeit der Fahrgeschwindigkeit angepaßt, da die Veränderung der Fahrgeschwindigkeit des Zuges langsam gegenüber der Geschwindigkeit moderner Rechnerprozessoren ist. Gleichzeitig kann über die Amplitude des Tracking Filters eine Anpassung der erforderlichen Regelkraft erzeugt werden.

Die Erfindung wird vorteilhafterweise bei Halb- und Vollscherenstromabnehmern, insbesondere im Bereich hoher Geschwindigkeiten und bei Mehrfachraktionen sowie auch zur Verminderung des Verschleßes an der Schleifleiste des Stromabnehmers und am Fahrdraht angewendet.

## Patentansprüche

1. Vorrichtung zur Verminderung nieder- und hochfrequenter Kontaktkraftschwankungen zwischen einem eine Wippe (10) und eine Schleifleiste (11) tragenden Stromabnehmer (2) eines elektrischen Triebfahrzeuges und einer Fahrleitung (12) durch Regeln der Kontaktkraftschwankungen mittels eines Aktorelements (13), das von einem adaptiv arbeitenden Regler (18) beeinflußt ist und mit dem außer einer vorbestimmten statischen Anpreßkraft eine zusätzliche Aktorkraft auf die Schleifleiste (11) des Stromabnehmers (2) direkt oder indirekt übertragen wird, wobei die zusätzliche Aktorkraft abhängig vom Betriebsverlauf durch einen die Kontaktkraft erfassenden Sensor gesteuert und den Kontaktkraftschwankungen entgegengerichtet ist, und wobei das Aktorelement (13) ein geschichteter piezoelektrischer Aktor ist, der unter einer mechanischen Vorspannung steht, **dadurch gekennzeichnet**, daß das Aktorelement (13) zwischen der Wippe (10) und der Schleifleiste (11) angeordnet ist und daß an dem piezoelektrischen Aktor direkt Signale für die Bestimmung der zwischen Schleifleiste (11) und Fahrleitung (12) herrschenden Kontaktkraft abgegriffen werden.

2. Vorrichtung nach Anspruch 1, **dadurch gekennzeichnet**, daß die Signale für die Bestimmung der Kontaktkraft einem Tracking-Filter zugeführt werden, das im Regelkreis des Aktorelements (13) vorgesehen ist, daß die Frequenz des Tracking-Filters fortlaufend auf einen Wert angepaßt wird, der der Geschwindigkeit des Triebfahrzeugs dividiert durch den Abstand zwischen benachbarten Masten oder Hängerelementen der Fahrleitung (12) entspricht, daß das Tracking-Filter nur die aktuell ermittelte Frequenz sowie deren erste und zweite Oberweile durchläßt und daß über die Amplitude des Tracking-Filters eine Anpassung der Regelkraft des Aktorelements (13) erzeugt wird.

3. Vorrichtung nach Anspruch 1 oder 2, **dadurch gekennzeichnet**, daß das Aktorelement (13) an oder in einem Halter (14) befestigt ist und daß die Eigenfrequenz der Halterung des Aktorelements (13) mindestens zwei Oktaven niedriger als die untere Grenze der Frequenz zur Regelung der Kontaktkraft ist.

4. Vorrichtung nach wenigstems einem der Ansprüche 1, 2 oder 3, **dadurch gekennzeichnet**, daß die Schleifleiste (11) über einen Hebelarm (15) und eine Feder (16) mit dem Aktorelement (13) gekoppelt ist, daß der Hebelarm (15) an einem Ende die Schleifleiste (11) trägt, daß an dem der Schleifleiste (11) abgewandte Ende des Hebelarms (15) eine Feder (16) angreift, die mit ihrem anderen Ende mit dem Aktorelement (13) verbunden ist und daß die Feder (16) die Schleifleiste (11) zur Fahrleitung (12) hindrückt sowie das Aktorelement (13) unter die Vorspannung setzt.

## Claims

1. Device for reducing low-frequency and highfrequency contact force fluctuations between a current collector (2), bearing a rocker (10) and a pantograph wearing strip (11), of an electrical tractive unit and a contact wire (12) by automatically controlling the contact force fluctuations by means of an actuating element (13), which is influenced by an adaptively operating controller (18) and with which not only a predetermined static pressing force but also an additional actuator force is transferred directly or indirectly to the pantograph wearing strip (11) of the current collector (2), the additional actuator force being controlled on the basis of the course of operational events by a sensor picking up the contact force and being designed to counteract the contact force fluctuations, and the actuator element (13) being a laminated piezoelectric actuator which is under a mechanical prestress, **characterized in that** the actuator element (13) is arranged between the rocker (10) and the pantograph wearing strip (11) and in that signals for the determination of the contact force prevailing between the pantograph wearing strip (11) and the contact wire (12) are picked off directly at the piezoelectric actuator.

2. Device according to Claim 1, **characterized in that** the signals for the determination of the contact force are fed to a tracking filter, which is provided in the control loop of the actuator element (13), in that the frequency of the tracking filter is adapted continuously to a value which corresponds to the speed of the tractive unit divided by the distance between neighbouring masts or hanger elements of the contact wire (12), in that the tracking filter allows through only the frequency detected at the given time and its first and second harmonics and in that an adaptation of the control force of the actuator element (13) is produced via the amplitude of the tracking filter.

3. Device according to Claim 1 or 2, **characterized in that** the actuator element (13) is fastened on or in a holder (14) and in that the natural frequency of the holding means of the actuator element (13) is at least two octaves lower than the lower limit of the frequency for controlling the contact force.

4. Device according to at least one of Claims 1, 2 or 3, **characterized in that** the pantograph wearing strip (11) is coupled to the actuator element (13) via a lever arm (15) and a spring (16), in that the lever arm (15) bears the pantograph wearing strip (11) at one end, in that the end of the lever arm (15) remote from the pantograph wearing strip (11) has acting on it a spring (16) which is connected by its other end to the actuator element (13), and in that the spring (16) presses the pantograph wearing strip (11) towards the contact wire (12) and exerts the prestress on the actuator element (13).

## Revendications

1. Dispositif pour réduire les fluctuations aux hautes et basses fréquences de la force de contact entre un pantographe (2) d'un véhicule à entraînement électrique portant un archet (10) et une barre de frottement (11) et un caténaire (12) par régulation des fluctuations de la force de contact au moyen d'un élément d'actionnement (13), qui est influencé par un régulateur (18) travaillant de manière adaptative et avec lequel, en dehors d'une force de pression statique prédéterminée, une force d'appoint de l'élément d'actionnement est transférée directement ou indirectement à la barre de frottement (11) du pantographe (2), la force d'appoint de l'élément d'actionnement étant commandée en fonction du déroulement de l'exploitation par un capteur enregistrant la force de contact et étant dirigée à l'encontre des fluctuations de la force de contact, et l'élément d'actionnement (13) étant un élément d'actionnement piézoélectrique revêtu qui est placé sous précontrainte mécanique, **caractérisé en ce que** l'élément d'actionnement (13) est disposé entre l'archet (10) et la barre de frottement (11) et en ce que des signaux sont prélevés directement sur l'élément d'actionnement piézoélectrique pour déterminer la force de contact régnant entre la barre de frottement (11) et la caténaire (12).

2. Dispositif selon la revendication 1, **caractérisé en ce que** les signaux pour la détermination de la force de contact sont acheminés à un filtre de poursuite qui est monté dans le circuit de régulation de l'élément d'actionnement (13), en ce que la fréquence du filtre de poursuite est ajustée en continu sur une valeur qui correspond à la vitesse du véhicule entraîné divisée par la distance entre des poteaux ou des éléments de suspension adjacents de la caténaire (12), en ce que le filtre de poursuite ne laisse passer que la fréquence réellement déterminée ainsi que la première et la seconde harmoniques supérieures et en ce qu'un ajustement de la force de réglage de l'élément d'actionnement (13) est produit par le biais de l'amplitude du filtre de poursuite.

3. Dispositif selon la revendication 1 ou 2, **caractérisé en ce que** l'élément d'actionnement (13) est fixé sur ou dans un support (14) et en ce que la fréquence propre du support de l'élément d'actionnement (13) est au moins 2 octaves inférieure à la limite inférieure de la fréquence pour le réglage de la force de contact.

4. Dispositif selon au moins l'une quelconque des revendications 1, 2 ou 3, **caractérisé en ce que** la barre de frottement (11) est couplé à l'élément d'actionnement (13) via un bras de levier (15) et un ressort (16), en ce que le bras de levier (15) porte à une extrémité la barre de frottement (11), en ce que s'applique sur l'extrémité du bras de levier (15) opposée à la barre de frottement (11) un ressort (16) qui est relié par son autre extrémité à l'élément d'actionnement (13) et en ce que le ressort (16) presse la barre de frottement vers la caténaire (12) et place également l'élément d'actionnement (13) sous la précontrainte.
